# EUROPEAN PATENT APPLICATION

(11) **EP 1 801 442 A1**
(43) Date of publication of application: **27.06.2007**
(21) Application number: 06026971.9
(22) Date of filing: 27.12.2006
(51) Int. Cl.: F16D 13/54, F16D 28/00

(54) **Clutch mechanism free from influence of axial displacement of rotary member**

(30) Priority: 26.12.2005 JP 2005372688
(71) Applicant: HITACHI, LTD., Chiyoda-ku Tokyo 100-8280 (JP)
(72) Inventor: Yamasaki, Masaru c/o Hitachi, Ltd. 12th Floor,, Chiyoda-ku Tokyo 100-8220 (JP); Morita, Minoru c/o Hitachi, Ltd. 12th Floor,, Chiyoda-ku Tokyo 100-8220 (JP); Konno, Hitoshi c/o Hitachi, Ltd. 12th Floor, Chiyoda-ku Tokyo 100-8220 (JP); Kuroiwa, Hiroshi c/o Hitachi Car Eng. Co., Ltd., Ibaraki, 312-0062 (JP); Yoshida, Yoshiyuki c/o Hitachi, Ltd. 12th Floor, Chiyoda-ku Tokyo 100-8220 (JP); Shishido, Kentaro c/o Hitachi Ltd. 12th Floor, Chiyoda-ku Tokyo 100-8220 (JP)
(74) Representative: Beetz & Partner

(57) **Abstract**

A clutch mechanism includes: an input rotary member (1) for receiving an input torque; a hub (4) for receiving the torque from the input rotary member (1); first friction discs (5) held by the hub (4); second friction discs (6) arranged to be pressed against the first friction discs (5) to achieve a torque-transmitting engagement therebetween; a drum (7) supporting the second friction discs (6) and stopped by the drum support bearing (31) against movement in one axial direction; and an output rotary member (8) for receiving the torque from the drum (7). Transmission of the torque from the drum (7) to the output rotary member (8) is achieved by a spline coupling therebetween. Axial movement of the drum in one direction is stopped by an end surface of a drum support bearing (31) mounted in a housing (21). The hub (4) is splined to the input rotary member (1) for axial movement relative to the rotary input member.

## Description

### BACKGROUND OF THE INVENTION

### 1. Field of the Invention

The present invention relates to an automotive clutch mechanism and, more particularly, to a clutch mechanism improved to avoid undesirable effect caused by variations of axial positions of input and output shafts of the clutch mechanism.

### 2. Description of the Related Art

In general, an automotive transmission employs speed-reducing gear trains composed of a plenty of gears. In order to achieve high quietness while assuring high endurance, helical gears having gear teeth slanting with respect to the gear axes are used as the transmission gears. Meshing helical gears, however, undesirably generate axial thrust force as reaction force components, due to slanting of the gear teeth.

Such axial thrust force is not only wasteful but also cause vibration and noise, while involving a risk of producing undesirable effects on other components of the transmission. Such vibration, noise and undesirable effect on other components disadvantageously depreciate commercial values of the transmissions and, hence, of automobiles mounting such transmissions. Attempts have therefore been made to address this problem by providing measures for bearing axial thrust force. For instance, Japanese Unexamined Patent Application Publication No. 2004-232812 proposes an arrangement having means provided on one side of a gear and intended for distributing or deconcentrating axial thrust force.

The thrust force deconcentrating arrangement disclosed in the above-mentioned publication, although effective in reducing mechanical stress in the bearing as a result of distribution of the axial thrust force, cannot completely eliminate axial displacement of the gear: namely, the gear tends to be axially displaced although the amount of the displacement is very small. Therefore, problems such as vibration, noise, and undesirable effects on transmission components still remain unsolved.

The problems are serious particularly in power transmission system in which a clutch mechanism is disposed adjacent to the gears under thrust force, since in most cases operation of clutches relies upon axial forces which act in the same directions as the axial force components generated on the gears. More specifically, even a small axial displacement of the gear causes a variation in the axial force which actuates the clutch, with the result that the torque transmitted through the clutch fluctuates to impair the drivability or comfort of the automobile.

### SUMMARY OF THE INVENTION

Accordingly, an object of the present invention is to provide a clutch mechanism in which undesirable effects on the operation of the clutch caused by thrust force components generated on shafts and meshing gears are suppressed to reduce fluctuation of driving torque, thus offering greater comfort of automobiles mounting the clutch mechanism.

To this end, the present invention in its one aspect provides a clutch mechanism which has the following parts or components: a first torque transmission member serving as a torque input member and a second torque transmission member serving as a torque outputting member; a hub for receiving a torque from the first torque transmission member and axially movable relative to the first torque transmission member; at least one first friction disc coaxially held by the hub and fixed against rotation relative to the hub; at least one second friction disc disposed coaxially with the first friction disc and arranged to be pressed against the first friction disc to achieve torque transmission engagement therebetween; and a drum supporting the second friction disc such that the second friction disc is fixed against rotation relative to the drum, the drum being arranged to transmit the torque to the second torque transmission member and axially movable relative to the second torque transmission member.

The present invention provides in its another aspect a clutch mechanism which has the following parts or components: a housing having a drum support bearing mounted therein; an input rotary member rotatably supported by the housing, for receiving an input torque; a hub for receiving the torque from the input rotary member; a first friction disc held by the hub; a second friction disc arranged to be pressed against the first friction disc to achieve a torque-transmitting engagement therebetween; a drum supporting the second friction disc and stopped by the drum support bearing against movement in one axial direction; and an output rotary member rotatably supported by the housing and splined to the drum for receiving the torque from the drum.

The described arrangement effectively suppresses mutual interference between the clutch actuating force which presses the first and second friction discs of the clutch pack and the axial thrust component generated by the helical gears which serve as the torque input and output rotary components of a transmission, thereby eliminating or reducing undesirable vibratory fluctuation of the driving torque transmitted through the clutch.

The present invention effectively suppresses variation of the torque transmitted through the clutch attributable to axial displacement of parts or components such as an input shaft and an output gear caused by thrust forces generated by meshing helical gears incorporated in the transmission. Thus, the present invention provides a transmission with reduced torque fluctuation, which in turn contributes to improvement in drivability and comfort of automobiles.

The above and other objects, features and advantages of the present invention will become more apparent from the following description of the preferred embodiments taken in conjunction with the accompanying drawings.

### BRIEF DESCRIPTION OF THE DRAWINGS

Fig. 1 is a sectional view of a clutch mechanism in accordance with an embodiment of the present invention, showing the details of the clutch mechanism;
Fig. 2 is a schematic illustration of an internally toothed female spline member which, in cooperation with an externally toothed male spline member, forms a spline mechanism that allows relative axial movement between two members while keeping these members in torque-transmitting relation;
Fig. 3 is a schematic illustration of an example of the externally toothed male spline member of the spline mechanism;
Fig. 4 is an illustration of a ball-ramp type clutch actuator for generating a clutch actuating axial pressing force, showing a rotary ramp member and balls arranged thereon;
Figs. 5A and 5B are schematic illustrations of the ball-ramp type clutch actuator showing the operation thereof;
Fig. 6 is a sectional view of a clutch mechanism in accordance with another embodiment of the present invention, showing the details of the clutch mechanism; and
Fig. 7 is a sectional view of a dual-clutch type transmission incorporating a clutch mechanism of the present invention.

### DESCRIPTION OF THE PREFERRED EMBODIMENTS

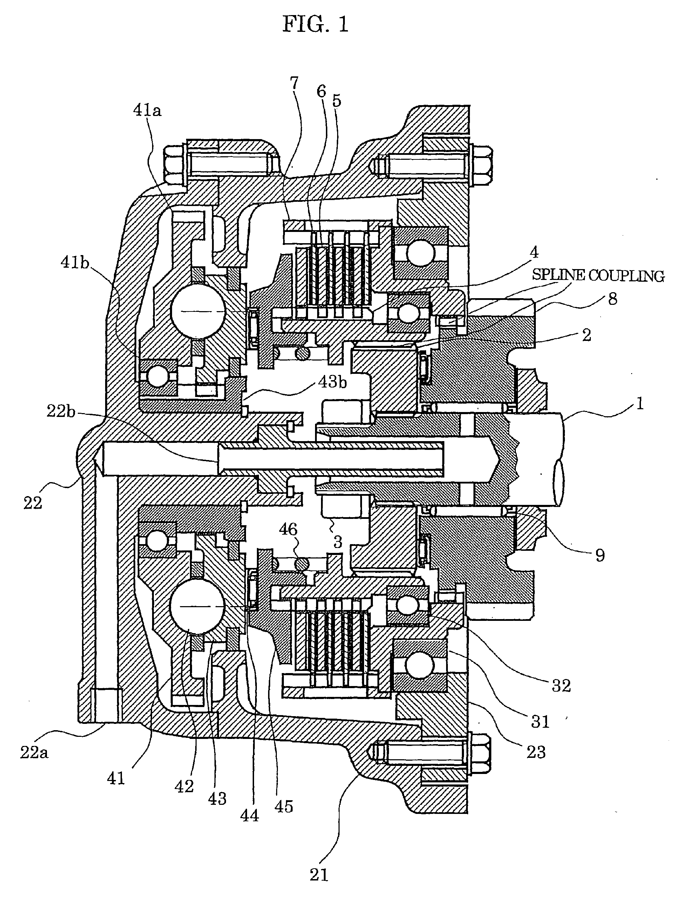

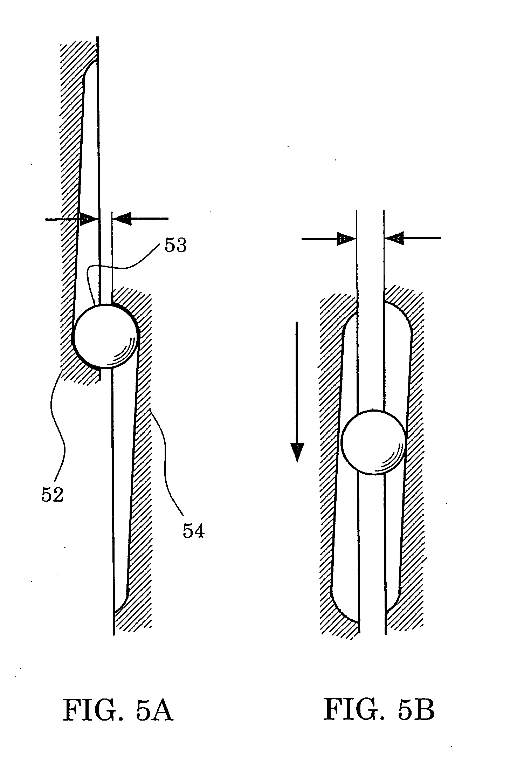

An embodiment of the present invention will be described with reference to Figs. 1 to 5. Referring to these Figures, a clutch mechanism embodying the present invention has the following parts or components: an input shaft 1 carrying an inner hub 2 fastened thereto by a shaft end nut 3; a hub 4; first friction discs 5; second friction discs 6; a drum 7; a gear 8 supported by needle bearings 9; a clutch case 21; an end cap 22 having a lubrication oil port 22a; a lubrication oil supply pipe 22b; an intermediate plate 23; a drum support bearing 31; a hub supporting bearing 32; a rotary ramp member 41; a gear 41a; a rotary ramp support bearing 41b; balls 42; a translational ramp member 43; a guide member 43b; a thrust bearing 44; and a pressure plate 45. In Figs. 5A and 5B illustrating the principle of operation of the ball-ramp type clutch actuator, numerals 52, 53 denote discs, while numeral 53 denotes balls.

Referring specifically to Fig. 1, the input shaft 1 serving as a torque input member for the clutch mechanism is disposed at the center of the clutch mechanism, and an inner hub 2 serving as a first transmission member is fastened to the input shaft 1 by means of the shaft-end nut 3. The input shaft 1 and the inner hub 2 are provided at their mating surfaces with spline grooves for torque transmission therebetween without allowing any slip. A hub 4 is arranged to surround the inner hub 2. The inner hub 2 and the hub 4 are provided at their mating surfaces with meshing spline teeth. There is no means or member which restricts axial relative movement between the inner hub 2 and the hub 4. Thus, the spline enables torque transmission between these two members without slip, while allowing axial relative movement therebetween.

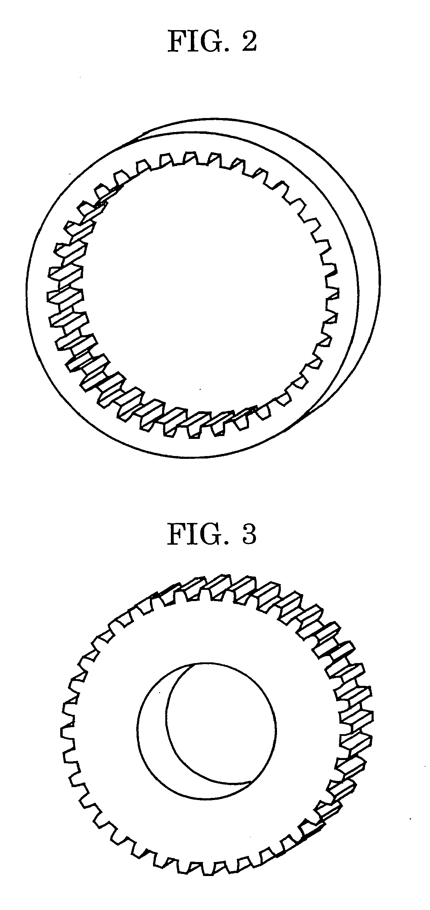

Fig. 2 shows an internally toothed female spline implemented on the hub 4, while Fig. 3 shows an externally toothed male spline on the inner hub 2. The hub 4 is provided on the external surface thereof with trapezoidal-shaped teeth which are not shown and which support first friction discs 5. The trapezoidal teeth on the hub 4 engage complementary grooves on the first friction discs 5, thereby preventing rotational relative movement therebetween. The second friction discs 6 are disposed coaxially with the first friction discs 5.

More specifically, the clutch mechanism of the illustrated embodiment has a multi-plate structure employing four first friction discs 5 and four second friction discs 6 which are arranged alternately in the axial direction. The number of friction discs, however, may freely be selected depending on factors such as the level of the torque to be transmitted and space requirement. In the illustrated embodiment, the first friction discs 5 are steel discs, while the second friction discs 6 are steel discs lined at both sides with a friction material, thus simultaneously achieving frictioning performance and durability. The friction discs 5, 6, however, may be made of other materials such as aluminum and may be provide with coating layers of a material different from the disc material.

The second disc 6 is provided at the outer peripheral surface thereof with trapezoidal teeth which interdigitate with complementary trapezoidal teeth formed on the inner peripheral surface of the drum 7 arranged to surround the second friction discs 6. Thus, the second friction discs 7 are prevented from rotating relative to the drum 7. The drum 7 is provided at its one axial end with an internal spline teeth which engage with complementary external spline teeth of the gear 8, whereby the torque received by the drum 7 is transmitted to the gear 8 which acts as a second transmission member.

As is the case of the spline coupling between the inner hub 2 and the hub 4, the spline coupling between the drum 7 and the gear 8 allows axial relative movement therebetween, while enabling torque transmission without any slip. The gear 8 is coaxially carried by the input shaft 1 through needle bearings 9, for free rotation on the input shaft 1. The drum 7 is adapted to receive an axial pressing force which is exerted by a ball-ramp type clutch actuator and transmitted through the clutch pack constituted by the first and second friction discs 5 and 6. The ball-ramp type clutch actuator will be later described in details. Axial movement of the drum 7, however, is restricted by an axial end of the drum support bearing 31. The hub 4 is rotatably supported by the drum 7 through the hub supporting bearing provided on the drum 7.

The first friction discs 5 and the second friction discs 6 of the clutch pack are adapted to be axially pressed to each other to realize a torque-transmitting friction engagement therebetween. One axial end of the clutch pack is stopped by the drum 7, so that the frictional engagement is established by an external force applied to the other axial end of the clutch pack. Such an axial external force applied to the clutch pack is produced and exerted by a mechanism which includes the pressure plate 45, ball-ramp type clutch actuator constituted by the rotary ramp member 41, balls 42 and the translational ramp member 43. The structure and operation of this actuator will be described later in more detail.

The axial pressing force applied to the clutch pack by the actuator mechanism is receiving by the drum 7. The hub 4 carrying the first friction discs 5, as well as the drum 7, is allowed to move axially relative to the input shaft 1 and the gear 8, respectively. Therefore, any axial displacement of the input shaft 1 and/or the gear 8 does not affect the axial pressing force applied to the clutch pack. The axial pressing force applied to the clutch pack and received by the drum 7 is borne by the axial end of the drum support bearing 31 which abuts the opposing axial end of the drum 7.

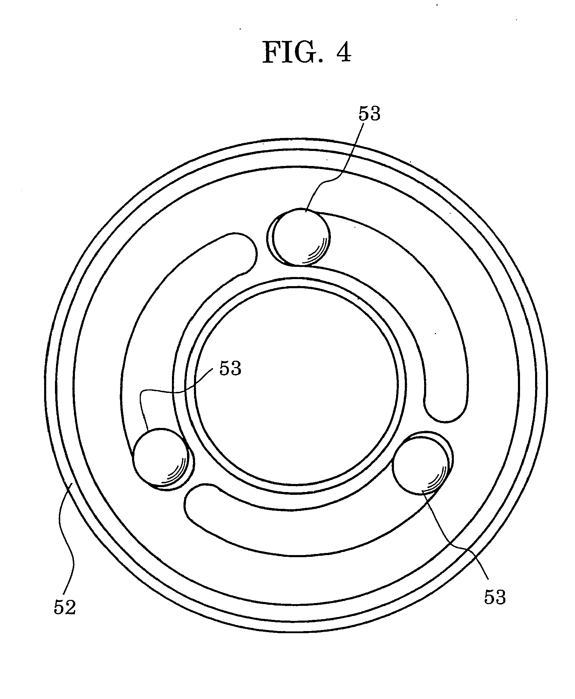

In order to produce axial pressing force to be applied to the clutch pack, the illustrated embodiment employs a ball-ramp type clutch actuator. As shown in Figs. 4 and 5, the ball-ramp type clutch actuator has a pair of discs 52 and 54 having two or three grooves having bottoms which serve as ramps. The discs 52 and 54 are arranged face to face such that the corresponding grooves oppose each other, with balls 53 disposed in opposing grooves. A relative rotation between the discs 52 and 54 causes the balls to roll on the groove bottoms which serve as ramps, so that the depths of the grooves where the balls are retained are varied to change the distance between the discs. Thus, the ball-ramp type clutch actuator converts a rotational movement into a linear movement.

Fig. 4 shows one 52 of the discs of the ball-ramp type clutch actuator together with the balls 53. As shown in this Figure, the disc 52 has three grooves. Figs. 5A and 5B show how the distance between the discs 52, 54 varies in accordance with the positions of the balls 53 relative to the grooves. In the state shown in Fig. 5A, the balls 53 are positioned in the deepest portions of the opposing grooves, so that the distance between the discs 52 and 54 is minimized. A relative rotation between the discs 52 and 54 from the state shown in Fig. 5A causes the balls 53 to roll on the ramps provided by the bottoms of the grooves, as if the balls ascend the ramps to positions, for example, as shown in Fig. 5B. Thus, the distance between the discs 52 and 54 increases by an amount corresponding to the amount by which the balls are axially displaced by the groove bottoms.

In the illustrated embodiment, the disc 52 corresponds to the rotary ramp member 41 shown in Fig. 1, which is rotatable but not movable in the axial direction, whereas the disc 54 corresponds to the translational ramp member 43 of Fig. 1, which is translationally movable in the axial direction but is fixed against rotation. More specifically, the rotary ramp member 41 is rotatably supported by the rotary ramp support bearing 41b but fixed against axial movement, whereas the translational ramp member 43 is associated with the guide member 43b having a non-circular cross-section so as to be fixed against rotation, while being allowed to move in the axial direction. The balls 53 correspond to the balls 42 disposed between the discs 41 and 43.

The rotary ramp member 41 is externally toothed to form a gear. Clutch actuating torque from an electric motor (not shown) is transmitted through this gear to the rotary ramp member 41. Axial movement of the translational ramp member 43 is transmitted to rotating clutch pack through a thrust bearing 44 and a pressure plate 45 which are disposed on one end surface of the translational ramp member 43. The return spring 46 loaded between the pressure plate 45 and the hub 4 serves to reset the pressure plate 45 and the translational ramp member 43 to original positions when the clutch pack is relieved from the axial pressing force.

The described clutch mechanism as an assembly is housed in a housing which is composed of the case 21, end cap 22 and the intermediate plate 23. The arrangement is such that the intermediate plate 23 is secured to the case 21 so as to support the drum 7 through the drum support bearing 31 carried by the intermediate plate 23. The hub 4 is supported by the hub support bearing 32 which is carried by the drum 7. The end cap 22, which also is secured to the case 21, rotatably supports the rotary ramp member 41 through the rotary ramp support bearing 41b. The end cap 22 also supports the translational ramp member 43 through the guide 43b. The end cap is provided with a lubrication oil port 22a through which a lubrication oil from a lubrication oil pump (not shown) is supplied to the core portion of the clutch mechanism through the lubrication oil supply pipe 22b, thereby cooling and lubricating the clutch mechanism.

Although the ball-ramp type clutch actuator is employed in the illustrated embodiment, the clutch actuator need not necessarily be of this type and may be replaced with another type of actuator such as a screw-type actuator, a solenoid-type actuator, a cam-type actuator, or an actuator employing a hydraulically operated piston. The clutch mechanism of the illustrated embodiment operates by an externally applied axial pressing force which acts to press the clutch pack. This, however, is not essential and the clutch mechanism may be of the type which relies upon a pulling or tensile force for pressing the clutch pack.

The clutch mechanism of the illustrated embodiment is put into engaging state, i.e., torque-transmitting state, when the clutch pack is pressed by an externally applied force. The clutch mechanism however, may be of the type in which the clutch pack is normally pressed and held in engaging state by the effect of a spring incorporated in the clutch mechanism and, when an external operating force is applied, the force of the spring is overcome to allow the clutch to be released.

A description will now be given of the operation of the illustrated embodiment which eliminates or suppresses undesirable effect produced by any axial displacement of the input shaft 1 or the output shaft, i.e., the output gear 8, which may be caused by an axial thrust force generated by meshing helical gears installed externally of the clutch mechanism. Although the following description premises that the shaft 1 and the gear 8 serve as torque inputting and outputting members, respectively, the clutch mechanism can equally operate when the input torque is received through the gear 8 and the output torque is delivered through the shaft 1.

When the clutch is in inoperative state, the first friction discs 5 and the second friction discs 6 are substantially freed from each other, so that only negligibly small torque is transmitted between these discs due to slight touch between these discs and due to viscosity of the oil residing between these discs. Thus, the clutch is in released condition so that no substantial torque is transmitted from the input shaft 1 to the gear 8. In the meantime, the lubrication oil pump (not shown) supplies the lubrication oil through the lubrication oil port 22a at a rate sufficient to cool and lubricate the clutch mechanism.

In order to bring the friction discs into engagement to achieve a torque-transmitting state, the electric motor (not shown) operates with electric power supplied under the control of a commanding controller (not shown), so as to rotate the rotary ramp member 41 relative to the translational ramp member 43 which is fixed against rotation, causing the balls 42 to roll along the grooves. The bottoms of the grooves are slanted to provide ramps which, in this case, causes the balls 42 to roll to the shallowest portions of the grooves, thereby increasing the distance between the rotary ramp member 41 and the translational ramp member 43.

As a result, the translational ramp member 43 is moved axially toward the clutch pack, since the rotary ramp member 41 is stopped by the end cap 22 so as not to move in the axial direction. This axial movement of the translational ramp member 43 is transmitted to the clutch pack through the thrust bearing 44 and the pressure plate 45. More specifically, the axial movement of the translational ramp member 43 grows large to take up the gap between the pressure plate 45 and the clutch pack and then the gap between the first and second friction discs 5 and 6. A further operation of the electric motor increases the axial pressing force exerted on the clutch pack, whereby the clutch commences to transmit the torque. Thus, the torque inputted through the input shaft 1 is transmitted to the gear 8 via the inner hub 2, hub 4, first friction discs 5, second friction discs 6, and the drum 7.

The gear 8 is a helical gear and therefore produces an axial thrust force due to torque-transmitting engagement with a cooperative helical gear outside the clutch mechanism. This axial thrust force causes an axial displacement of the gear 8 and, hence, of the input shaft 1 which carries the gear 8. This axial displacement, however, is conveniently accommodated by the spline coupling between the inner hub 2 and the hub 4 which allows relative axial movement therebetween. The axial displacement of the input shaft 1, therefore, does not affect the operation of the clutch. Similarly, the spline coupling between the gear 8 and the drum 7 accommodates the axial displacement of the gear 8, thus eliminating any influence of the axial displacement of the gear 8 on the operation of the clutch. Thus, the clutch can operate without being affected by the axial displacements of the input shaft 1 and the gear 8, by virtue of the spline coupling between the inner hub 2 and the hub 4 and the spline coupling between the gear 8 and the drum 7. The advantage of the invention has been described with regard to the axial displacement of the gear 8 and the input shaft 1 caused by an axial thrust force generated on the gear 8. Similar axial thrust force and, therefore, an axial displacement may occur with the input shaft 1. It will be appreciated that such axial displacement also is accommodated by the spline couplings and does not affect the operation of the clutch.

As will be understood from the foregoing description, the axial pressing force exerted on the clutch pack is not substantially affected by any thrust force generated by the gear 8 meshing with cooperative gear. This eliminates or suppresses undesirable fluctuation of the torque transmitted by the clutch mechanism, contributing to improvement in drivability and comfort of the automobile.

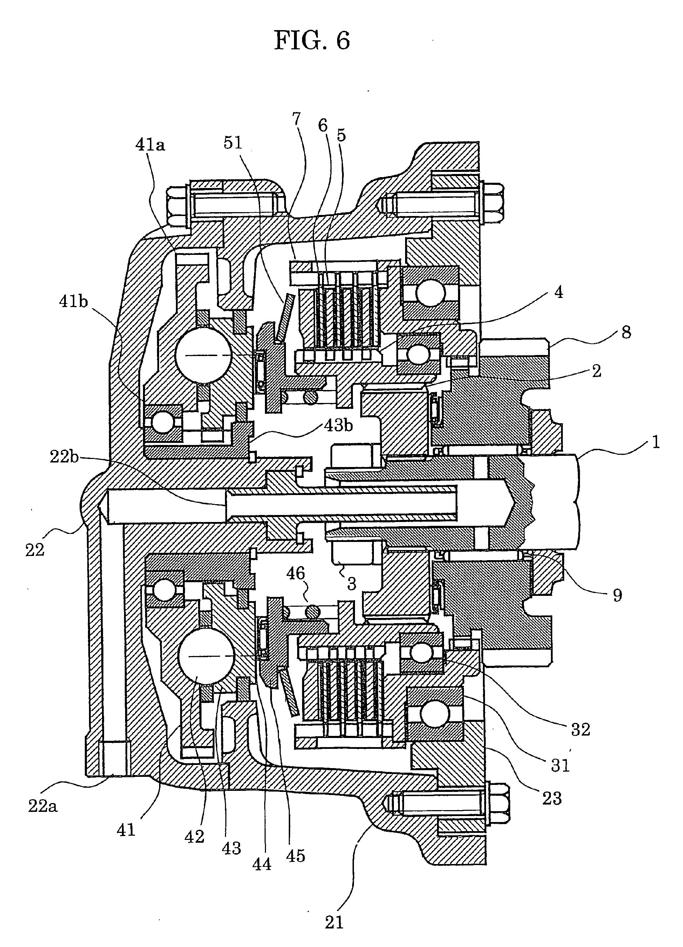

A description will now be given of a clutch mechanism in accordance with another embodiment of the present invention, with specific reference to Fig. 6. This embodiment is different from the embodiment shown in Fig. 1 in that a belleville spring 51 is loaded between the pressure plate 45 and the outermost first friction disc 5 so as to serve as a buffer member. Other portions are substantially the same as those of the embodiment shown in Fig. 1.

The operation of this embodiment is as follows. In order to activate the clutch into torque-transmitting state, a commanding controller which is not shown in the drawings supplies electric power to an electric motor which also is not shown, so as to rotate the rotary ramp member 41. Rotation of the rotary ramp member 41 causes a translational movement of the translational ramp member 43 toward the clutch pack. This movement is transmitted to the thrust bearing 44 and the pressure plate 45.

Since the Belleville spring 51 is loaded between the pressure plate 45 and the outermost first friction disc 51, the translational movement of the translational ramp member 43 serves to deflect the belleville spring 51. Thus, the axial pressing force exerted on the clutch pack is given as the reaction force produced by the deflected belleville spring 51.

In this embodiment, therefore, a desired axial pressing force to be applied to the clutch pack is obtained by controlling the angular displacement of the rotary ramp member of the ball-ramp type clutch actuator by means of the electric motor, rather than by controlling the torque applied by the electric motor to the rotary ramp member. More specifically, the angular displacement of the rotary ramp member is controlled by the electric motor so that the deflected belleville spring 51 produces the desired axial pressing force. The axial pressing force thus produced brings the first and second friction discs 5 and 6 into torque-transmitting engagement, thereby commencing torque transmission. The input torque received by the input shaft 1 is transmitted to the gear 8 via the inner hub 2, hub 4, first friction discs 5, second friction discs 6, and the drum 7.

The gear 8 is a helical gear and therefore produces an axial thrust force due to torque-transmitting engagement with a cooperative helical gear outside the clutch mechanism. This axial thrust force causes an axial displacement of the gear 8 and, hence, of the input shaft 1 which carries the gear 8. This axial displacement, however, is conveniently accommodated by the spline coupling between the inner hub 2 and the hub 4 which allows relative axial movement therebetween. The axial displacement of the input shaft 1, therefore, does not affect the operation of the clutch. Similarly, the spline coupling between the gear 8 and the drum 7 accommodates the axial displacement of the gear 8, thus eliminating any influence of the axial displacement of the gear 8 on the operation of the clutch.

As described above, the axial pressing force exerted on the clutch pack is not substantially affected by any thrust force generated by the gear 8 meshing with cooperative gear. This eliminates or suppresses undesirable fluctuation of the torque transmitted by the clutch mechanism, contributing to improvement in drivability and comfort of the automobile.

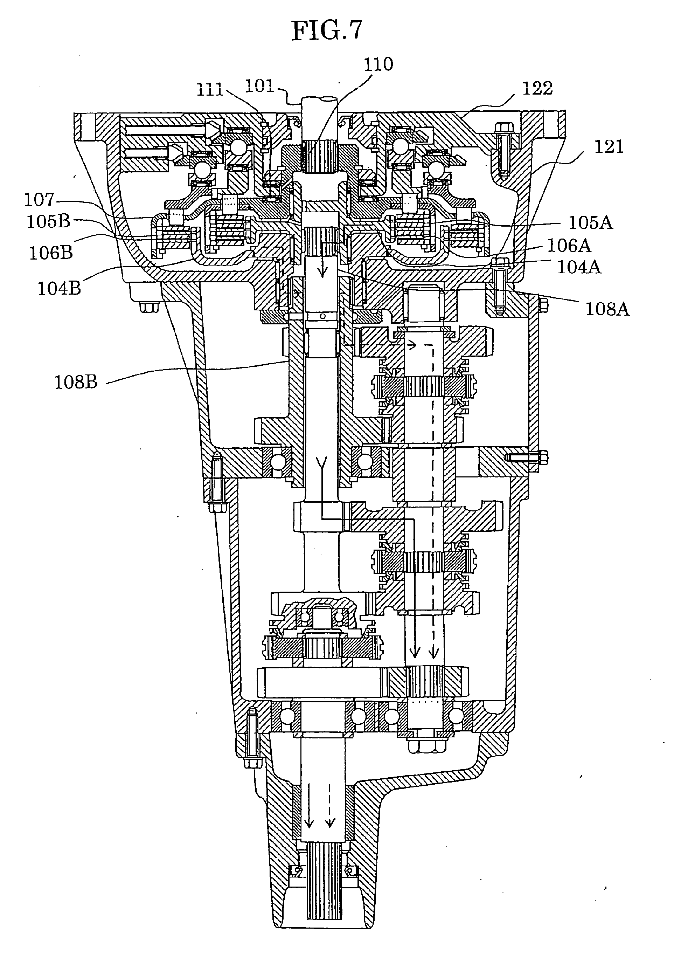

An example of use of the clutch mechanism embodying the present invention will be described with reference to Fig. 7 which shows, in a longitudinal sectional view, a dual clutch transmission (referred to as "DCT", hereinafter) incorporating a pair of clutch mechanisms embodying the present invention. Referring to this Figure, the DCT includes a DCT input shaft 101, a DCT drum 107, and a DCT intermediate plate 122. The DCT has two systems: namely, a system "A" and a system "B" which include, respectively, hubs 104A and 104B, first friction discs 105A and 105B, second friction discs 106A and 106B, and clutch output shafts 108A and 108B.

Referring to Fig. 7, the DCT drum 107 is splined to the DCT input shaft 101 as at 110 so as to be axially movable but not rotatable relative to the DCT input shaft 101. The DCT drum 107 is supported by the DCT intermediate plate 122 through a drum support bearing 111.

The DCT drum 107 carries a clutch pack composed of the first and second friction discs 105A, 106A of the system "A". The clutch pack operates in accordance with an axial pressing force exerted thereon, so as to allow a torque to be transmitted to the clutch output shaft 108A via the hub 104A of the system "A". The DCT drum 107 also carries a clutch pack composed of the first and second friction discs 105B, 106B of the system "B". The clutch pack operates in accordance with an axial pressing force exerted thereon, so as to allow a torque to be transmitted to the clutch output shaft 108B of the system "B".

Each clutch pack is stopped at its one end by the DCT drum 107 while the other end contacts an actuating portion of an actuator. Thus, an axial pressing force is applied to the clutch pack when it is pressed between the actuator and the DCT drum 107. The DCT has internal gears which cooperate to convert the torques derived from the clutch output shaft 108A of the system "A" and the clutch output shaft 10B of the system "B" into speed and torque which are optimum for the state of running of an automobile (not shown), and outputs the speed and torque through its output end. The clutch output shaft 108A of the system "A" and the clutch output shaft 108B of the system "B" are independent from each other. The route of torque transmission through the system "A" and the route of torque transmission through the system "B" are shown by solid-line arrows and dotted-line arrows, respectively, in Fig. 7.

The principle of operation of each clutch is the same as that of the embodiment described in connection with Figs. 1 to 5. Namely, each clutch is actuated by a ball-ramp type clutch actuator which is powered by an electric motor under the control of a controller. During transmission of torque through the clutches, the DCT input shaft 101 is allowed to move axially relative to the DCT drum 107, by virtue of the spline coupling 110 therebetween. Therefore, the DCT drum 107 which hold the clutches can operate without being affected by axial displacement of the DCT input shaft 101. This eliminates or reduces fluctuation of the torque transmitted through each clutch mechanism and, hence, the driving torque of an automobile, thereby contributing to improvement in the drivability and comfort of the automobile.

## Claims

1. A clutch mechanism, comprising:
a first torque transmission member (1) serving as a torque input member and a second torque transmission member serving as a torque outputting member;
a hub (4) for receiving a torque from the first torque transmission member (1) and axially movable relative to the first torque transmission member;
at least one first friction disc (5) coaxially held by the hub and fixed against rotation relative to the hub (4);
at least one second friction disc (6) disposed coaxially with the first friction disc (5) and arranged to be pressed against the first friction disc (5) to achieve torque transmission engagement therebetween; and
a drum (7) supporting the second friction disc (6) such that the second friction disc (6) is fixed against rotation relative to the drum (7), the drum (7) being arranged to transmit the torque to the second torque transmission member and axially movable relative to the second torque transmission member.

2. A clutch mechanism, comprising:
a housing (21) having a drum support bearing (31) mounted therein;
an input rotary member rotatably supported by the housing (21), for receiving an input torque;
a hub (4) for receiving the torque from the input rotary member (1);
a first friction disc (5) held by the hub (4);
a second friction disc (6) arranged to be pressed against the first friction disc (5) to achieve a torque-transmitting engagement therebetween;
a drum (7) supporting the second friction disc (6) and stopped by the drum support bearing (31) against movement in one axial direction; and
an output rotary member (8) rotatably supported by the housing (21) and splined to the drum (7) for receiving the torque from the drum (7).

3. A clutch mechanism according to Claim 1, further comprising:
a housing (21) having a unitary structure;
an actuator mounted in the housing, for producing a force with which the first and second friction discs (5, 6) are pressed to each other; and
a drum support bearing (31) mounted in the housing (21) and supporting the drum (7).

4. A clutch mechanism according to Claim 2, wherein the housing (21) has a unitary structure in which the drum support bearing (31) is mounted, the clutch mechanism further comprising:
an actuator mounted in the housing (21), for producing a force with which the first and second friction discs (5, 6) are pressed to each other.

5. A clutch mechanism according to Claim 1 or 2, further comprising:
an actuator for producing a force with which the first and second friction discs (5, 6) are pressed to each other; and
an elastic member disposed between the first or second friction disc (5, 6) and the actuator and deflectable under the force produced by the actuator to produce an elastic reaction force with which the first and second friction members (5, 6) are pressed to each other.

6. A clutch mechanism according to Claim 1 or 2, further comprising a hub support bearing (32) carried by the drum (7) and supporting the hub (4), such that the hub (4) is axially located on the drum (7) by the hub support bearing (32).

7. An automotive transmission comprising a clutch mechanism according to one of Claims 1 to 6.
